# EUROPEAN PATENT APPLICATION

(11) **EP 4 542 078 A1**
(43) Date of publication of application: **23.04.2025**
(21) Application number: 24205084.7
(22) Date of filing: 07.10.2024
(51) Int. Cl.: F16D 69/02, C04B 41/52, F16D 49/00

(54) **CERAMIC MODIFIED LINERS FOR WEAR IMPROVEMENT INCORE-LINER BRAKE CONFIGURATION**

(30) Priority: 18.10.2023 US 202318489329
(71) Applicant: Goodrich Corporation, Charlotte, NC 28217-4578 (US)
(72) Inventor: JARMAN, Jecee, Pueblo, CO, 81001 (US); KIRKPATRICK, Christopher T., Pueblo West, 81007 (US)
(74) Representative: Dehns

(57) **Abstract**

A method for decreasing a wear rate at a core-liner interface between a core component (108) and a wear liner component of a core-liner brake stack configuration and increasing the life of the core component (108) is disclosed herein. The method includes coating a surface of a substrate with a ceramic solution, wherein the substrate is a first surface of the core component (108) or a second non-wearing surface of the wear liner component, wherein the first surface of the core component (108) and the second non-wearing surface of the wear liner component meet to form an interface between the core component (108) and the wear liner component, drying the coated surface to produce oxide particulates within the substrate, forming a coated brake disk by coupling the wear liner component onto the core component (108), wherein the coated brake disk includes the coated surface, and installing the coated brake disk in a multi-disk brake system.

## Description

### FIELD

The present disclosure generally relates to aircraft braking systems and, more specifically, to ceramic particulate coatings for wear improvement of the aircraft braking system.

### BACKGROUND

Aircraft typically utilize brake systems on wheels to slow or stop the aircraft during landings, taxiing, and rejected takeoffs. The brake systems generally employ a brake stack or heat sink comprising a series of friction disks that may be forced into sliding contact with one another during brake actuation to slow or stop the aircraft. The brake stack typically comprises rotor disks and stator disks that, in response to axial compressive loads, convert the kinetic energy of the aircraft into heat through frictional forces experienced between the friction disks.

### SUMMARY

Disclosed herein is a method for decreasing a wear rate at a core-liner interface between a core component and a wear liner component of a core-liner brake stack configuration and increasing the life of the core component. The method includes coating a surface of a substrate with a ceramic solution, wherein the substrate is a first surface of the core component or a second non-wearing surface of the wear liner component, wherein the first surface of the core component and the second non-wearing surface of the wear liner component meet to form an interface between the core component and the wear liner component, drying the coated surface to produce oxide particulates within the substrate, forming a coated brake disk by coupling the wear liner component onto the core component, wherein the coated brake disk includes the coated surface, and installing the coated brake disk in a multi-disk brake system.

In various embodiments, the wear liner component is made of a carbon/carbon (C/C) composite material and the core component is made of C/C composite or ceramic matrix composite (CMC) material and wherein the ceramic solution is applied to the surface of the substrate via at least one of spraying, painting, smearing, brushing, sorption, cold spraying, sputtering, pouring, sprinkling, or peptization. In various embodiments, the ceramic solution comprises at least one of nano ceramic binary oxide particulates, doped nano ceramic binary oxide particulates, or nano ceramic ternary oxide particulates and acts as a release agent between the core component and the wear liner component.

In various embodiments, the nano ceramic binary oxide particulates comprise at least one of zirconium oxide (ZrO₂), aluminum oxide (Al₂O₃), magnesium oxide (MgO), lithium oxide (Li₂O), beryllium oxide (BeO), calcium oxide (CaO), strontium oxide (SrO), or barium oxide (BaO). In various embodiments, the nano ceramic binary oxide particulates comprise at least one of scandium (III) oxide (Sc₂O₃), yttrium oxide (Y₂O₃), cobalt (II) oxide (CoO), nickel oxide (NiO), silicon oxide (SiO₂), titanium oxide (TiO₂), or hafnium(IV) oxide (HfO₂). In various embodiments, the nano ceramic binary oxide particulates comprise at least one of vanadium (II) oxide (VO), vanadium (III) oxide (V₂O₃), vanadium oxide (VO₂), niobium (II) oxide (NbO), tantalum oxide (Ta₂O₅), tungsten (IV) oxide (WO₂), tungsten trioxide (WO₃), gallium oxide (GaO), indium oxide (In₂O₃), or tin (IV) oxide (SnO₂).

In various embodiments, the nano ceramic binary oxide particulates comprise at least one of lanthanum oxide (La₂O₃), cerium dioxide (CeO₂), praseodymium(III,IV) oxide (Pr₆O₁₁), neodymium oxide (Nd₂O₃), samarium oxide (Sm₂O₃), europium oxide (Eu₂O₃), gadolinium oxide (Gd₂O₃), terbium oxide (Tb₂O₃), or dysprosium oxide (Dy₂O₃). In various embodiments, the nano ceramic binary oxide particulates comprise at least one of holmium oxide (Ho₂O₃), erbium oxide (Er₂O₃), thulium oxide (Tm₂O₃), ytterbium oxide (Yb₂O₃), or lutetium oxide (Lu₂O₃).

In various embodiments, the doped nano ceramic binary oxide particulates comprise at least one of yttrium oxide stabilized zirconium(IV) oxide (YSZ) or zirconium(IV) oxide toughened aluminum oxide (ZTA). In various embodiments, the nano ceramic ternary oxide particulates comprise at least one of lithium silicate (Li₂SiO₃), mullite (Si₂Al₆O₁₃), calcium silicate (Ca₂SiO₄), hafnium orthosilicate (HfSiO₄), lithium titanate (Li₂TiO₃), aluminum titanate (Al₂TiO₅), calcium titanate (CaTiO₃), strontium titanate (SrTiO₃), barium titanate (BaTiO₃), hafnium titanate (HfTiO₄) strontium zirconate (SrZrO₃), or barium zirconate (BaZrO₃).

Also disclosed herein is a method for decreasing the wear rate of a core-rivet interface between a core and a rivet used to mechanically attach a liner component to the core within a core-liner brake stack configuration and increasing the life of the core. The method includes coating a plurality of rivet holes formed in the core with a ceramic solution, including coating an inner lining of each rivet hole of the plurality of rivet holes, drying the core to produce oxide particulates within the inner lining of each rivet hole to form a coated core, and installing the coated core in a multi-disk brake system using a plurality of fasteners, each of the plurality of fasteners extending through a rivet hole of the plurality of rivet holes.

In various embodiments, the core is made of C/C composite or ceramic matrix composite (CMC) material and wherein the ceramic solution is applied to the inner lining of each rivet hole via at least one of spraying, painting, smearing, brushing, sorption, cold spraying, sputtering, pouring, sprinkling, or peptization. In various embodiments, the ceramic solution comprises at least one of nano ceramic binary oxide particulates, doped nano ceramic binary oxide particulates, or nano ceramic ternary oxide particulates and acts as a release agent between the core and the plurality of rivet holes.

In various embodiments, the nano ceramic binary oxide particulates comprise at least one of zirconium oxide (ZrO₂), aluminum oxide (Al₂O₃), magnesium oxide (MgO), lithium oxide (Li₂O), beryllium oxide (BeO), calcium oxide (CaO), strontium oxide (SrO), or barium oxide (BaO). In various embodiments, the nano ceramic binary oxide particulates comprise at least one of scandium (III) oxide (Sc₂O₃), yttrium oxide (Y₂O₃), cobalt (II) oxide (CoO), nickel oxide (NiO), silicon oxide (SiO₂), titanium oxide (TiO₂), or hafnium(IV) oxide (HfO₂). In various embodiments, the nano ceramic binary oxide particulates comprise at least one of vanadium (II) oxide (VO), vanadium (III) oxide (V₂O₃), vanadium oxide (VO₂), niobium (II) oxide (NbO), tantalum oxide (Ta₂O₅), tungsten (IV) oxide (WO₂), tungsten trioxide (WO₃), gallium oxide (GaO), indium oxide (In₂O₃), or tin (IV) oxide (SnO₂).

In various embodiments, the nano ceramic binary oxide particulates comprise at least one of lanthanum oxide (La₂O₃), cerium dioxide (CeO₂), praseodymium(III,IV) oxide (Pr₆O₁₁), neodymium oxide (Nd₂O₃), samarium oxide (Sm₂O₃), europium oxide (Eu₂O₃), gadolinium oxide (Gd₂O₃), terbium oxide (Tb₂O₃), or dysprosium oxide (Dy₂O₃). In various embodiments, the nano ceramic binary oxide particulates comprise at least one of holmium oxide (Ho₂O₃), erbium oxide (Er₂O₃), thulium oxide (Tm₂O₃), ytterbium oxide (Yb₂O₃), or lutetium oxide (Lu₂O₃).

In various embodiments, the doped nano ceramic binary oxide particulates comprise at least one of yttrium oxide stabilized zirconium(IV) oxide (YSZ) or zirconium(IV) oxide toughened aluminum oxide (ZTA). In various embodiments, the nano ceramic ternary oxide particulates comprise at least one of lithium silicate (Li₂SiO₃), mullite (Si₂Al₆O₁₃), calcium silicate (Ca₂SiO₄), hafnium orthosilicate (HfSiO₄), lithium titanate (Li₂TiO₃), aluminum titanate (Al₂TiO₅), calcium titanate (CaTiO₃), strontium titanate (SrTiO₃), barium titanate (BaTiO₃), hafnium titanate (HfTiO₄) strontium zirconate (SrZrO₃), or barium zirconate (BaZrO₃).

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a multi-disk brake system, in accordance with various embodiments.
FIG. 2A illustrates an exploded view of a rotor having a wear liner with integrated torque buttons, in accordance with various embodiments.
FIG. 2B illustrates an assembled rotor, in accordance with various embodiments.
FIG. 2C illustrates a cutaway view of an assembled rotor, in accordance with various embodiments.
FIG. 3 illustrates an assembled stator comprising wear liner segments having integrated torque buttons, in accordance with various embodiments is illustrated.
FIG. 4 illustrates a method for decreasing wear on core components within a brake stack or heat sink using ceramic solution coatings and thus, increasing core component life is illustrated, in accordance with various embodiments.
FIG. 5 illustrates a method for decreasing interfacial wear on non-wearing faces of liner components within a brake stack or heat sink that adhere to core components using ceramic solution coatings and thus, increasing liner component life is illustrated, in accordance with various embodiments.
FIG. 6 illustrates a method for decreasing wear in rivet holes of core components within a brake stack or heat sink and thus, increasing the life of the core component is illustrated, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Carbon/carbon (C/C) composites and silicon carbide (SiC) based ceramic matrix composites (CMCs) have found use in the aerospace and other industries for fabricating brake stacks and heat sinks. These brake stacks or heat sinks may utilize a core-liner concept (C/C or CMC core, C/C liner). By itself, carbon provides good wear resistance on both wearing and non-wearing faces of the liner during use. As core-liner brake concepts are brought in for overhaul, the used liner will be discarded after a single use, but will have rubbed and worn slightly on the core component during operation. In core-liners where a CMC core is utilized, the CMC is not currently designed to function as a wearing material itself and instead provides thermal management in the brake stack or heat sink. This creates the need for wear liners to wear as little as possible on the CMC core during brake operation in order to extend the core life and allow it to be utilized in more tours in the field after overhauling it and pairing the core with new liners.

Provided herein, according to various embodiments, are manufacturing system(s) and method(s) for decreasing core-liner interface wear rate and thus, increasing core life. In various embodiments, a brake disk is received. In various embodiments, the brake disk may be a CMC core with wear liners, a CMC core by itself, a C/C core with wear liners, or a C/C core by itself. In various embodiments, where the brake disk is a CMC core with C/C wear liners which couple to either side of the CMC core, a ceramic solution may be placed onto the surface of the wear liners which become part of the core-liner interface to function as both a release agent for removing the liners during overhaul and as a lubricant between the core and liner to prevent wear on the CMC core itself from the liner.

In various embodiments, at least one surface of an interface between a core and wear liner may be coated with a ceramic solution to function as a lubricant and release agent that minimizes wear between the core and liner and allows easy removal of the liner from the core during overhaul. In various embodiments, the ceramic solution is applied to the surface of the core and/or the liner via at least one of spraying, painting, smearing, brushing, sorption, cold spraying, sputtering, pouring, sprinkling, or peptization. In various embodiments, a first surface of a CMC core may be coated with the ceramic solution. In various embodiments, a first non-wearing surface of the wear liner may be coated with the ceramic solution. In various embodiments, the interface between the CMC core and the wear liner includes the first surface of the CMC core and the first non-wearing surface of the wear liner. In various embodiments, a plurality of rivet holes formed in the CMC core may be coated with the ceramic solution. In various embodiments, coating the plurality of rivet holes includes coating an inner surface, or inner diameter, of each of the plurality of rivet holes with the ceramic solution.

In various embodiments, where non-wearing surfaces of the wear liners are coated with the ceramic solution or where surfaces of the CMC core are coated with the ceramic solution which is comprised of nano ceramic binary oxide, doped nano ceramic binary oxide particulates, and/or nano ceramic ternary oxide particulates suspended therein. In various embodiments, this modification provides for managing friction between another coated surface or even against an uncoated surface in the core-liner interface after liners are affixed to a CMC core. In that regard, in various embodiments, non-wearing surfaces of a wear liner affixed to a CMC core surface that are coated with a ceramic solution manage friction in response to wear liner surface wearing against a surface of a coated CMC core or an uncoated CMC core. In various embodiments, surfaces of a CMC core that are coated with a ceramic solution manage friction in response to the CMC core surface wearing against a surface of a coated non-wearing face of a wear liner or an uncoated non-wearing face of a wear liner.

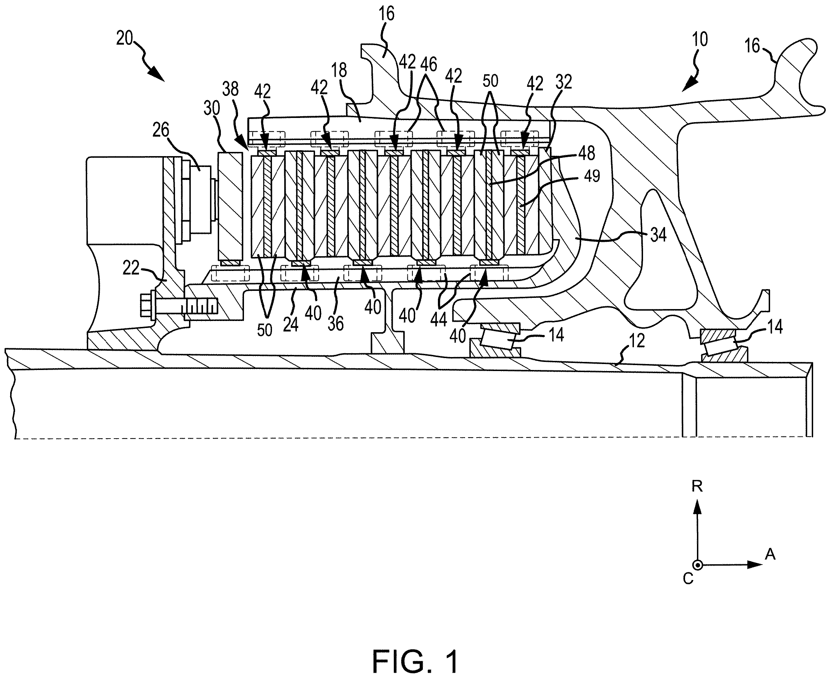

Referring to FIG. 1, a multi-disk brake system 20 is illustrated according to various embodiments. The system may include a wheel 10 supported for rotation around axle 12 by bearings 14. Axle 12 defines an axis of multi-disk brake system 20 and the various components thereof. Any reference to the terms axis and axial may include an axis of rotation defined by axle 12 or a dimension parallel to such axis. Wheel 10 includes rims 16 for supporting a tire, and a series of axially extending rotor splines 18 (one shown). Rotation of wheel 10 is modulated by multi-disk brake system 20. Multi-disk brake system 20 includes torque flange 22, torque tube 24, a plurality of pistons 26 (one shown), pressure plate 30, and end plate 32. Torque tube 24 may be an elongated annular structure that includes reaction plate 34 and a series of axially extending stator splines 36 (one shown). Reaction plate 34 and stator splines 36 may be integral with torque tube 24, as shown in FIG. 1, or attached as separate components.

Multi-disk brake system 20 also includes a plurality of friction disks 38. The plurality of friction disks 38 includes at least one non-rotatable friction disk (stator) 40, and at least one rotatable friction disk (rotor) 42. Stators 40 may include a carbon/carbon (C/C) disk or ceramic matrix composite (CMC) (stator core) 48. Stators 40 may also include wear liners 50 located over opposing sides of a CMC core 48. Rotors 42 may include a carbon/carbon (C/C) disk or ceramic matrix composite (CMC) (rotor core) 49. Rotors 42 may also include wear liners 50 located over opposing sides of a CMC core 49. Each friction disk 38 includes an attachment structure. For example, stators 40 include a plurality of stator lugs 44 at circumferentially spaced positions around an inner circumference of stators 40, and rotors 42 include a plurality of rotor lugs 46 at circumferentially spaced positions around an outer circumference of rotors 42.

In various embodiments, pressure plate 30, end plate 32, wear liners 50, stator core 48, and rotor core 49 are each annular structures made at least partially from a carbon composite material. In various embodiments, friction disk cores 48, 49 and wear liners 50 may comprise different materials. For example, friction disk cores 48, 49 may comprise a first material, for example, C/C or CMC, and wear liners 50 may comprise a second material, for example, a carbon composite material. In various embodiments, friction disk cores 48, 49 and wear liners 50 may comprise the same material. For example, friction disk cores 48, 49 and wear liners 50 may both comprise a carbon composite material. The material of friction disk cores 48, 49 may be selected for its structural properties, thermal conductivity, heat capacity, and/or oxidation resistance properties, and the material of wear liners 50 may be selected for its wear resistance and/or frictional properties. Thus, friction disks 38 may experience the structural advantages of friction disk cores 48, 49 and the frictional advantages of wear liners 50.

Torque flange 22 is mounted to axle 12. Torque tube 24 is bolted to torque flange 22 such that reaction plate 34 is near an axial center of wheel 10. End plate 32 is connected to a surface of reaction plate 34 facing axially away from the axial center of wheel 10. Thus, end plate 32 is non-rotatable by virtue of its connection to torque tube 24. Stator splines 36 may support the pressure plate 30 such that pressure plate 30 is also non-rotatable. Stator splines 36 also support the stators 40. Stators 40 engage stator splines 36 with gaps formed between stator lugs 44. Similarly, rotors 42 engage rotor splines 18 with gaps formed between rotor lugs 46. Thus, rotors 42 are rotatable by virtue of their engagement with rotor splines 18 of wheel 10.

In various embodiments, rotors 42 are arranged with end plate 32 on one end, pressure plate 30 on the other end, and stators 40 interleaved such that rotors 42 are adjacent to non-rotatable friction components. Pistons 26 are connected to torque flange 22 at circumferentially spaced positions around torque flange 22. Pistons 26 face axially toward wheel 10 and contact a side of pressure plate 30 opposite rotors 42. Pistons 26 may be powered electrically, hydraulically, or pneumatically. In response to actuation of pistons 26, a force towards reaction plate 34 is exerted on friction disks 38 such that rotors 42 and stators 40 are pressed together between pressure plate 30 and end plate 32.

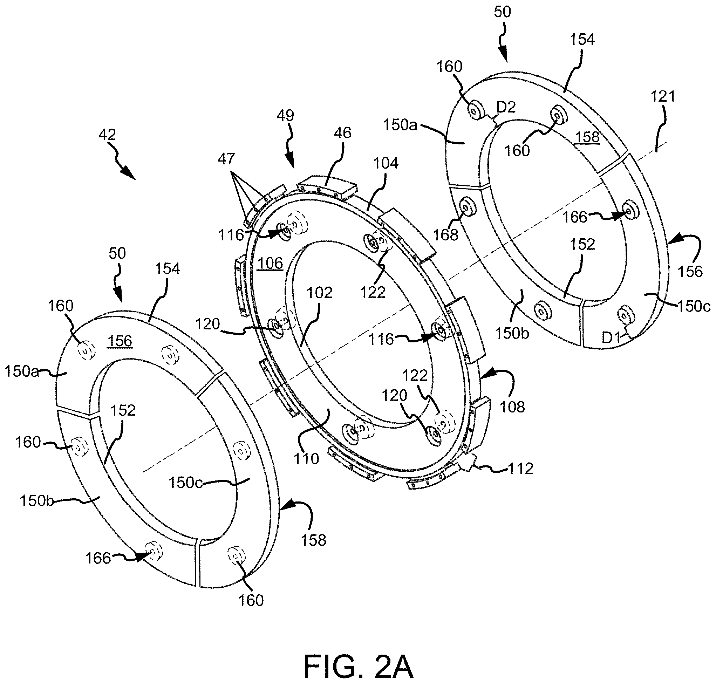

Referring to FIG. 2A, an exploded view of a rotor 42 having a wear liner with integrated torque buttons is illustrated, according to various embodiments. While FIG. 2A illustrates a wear liner with torque buttons, the various embodiments are not limited to this embodiment. In that regard, in various embodiments, integrated torque slots may be utilized to attach the wear liners to a rotor 42 or stator 40 CMC core. Rotor 42 may comprise rotor core 49 and two wear liners 50 located over opposing surfaces of rotor core 49. Wear liners 50 may be segmented such that each wear liner 50 comprises a plurality of wear liner segments (e.g., first wear liner segment 150a, second wear liner segment 150b, and third wear liner segment 150c). Wear liner segments 150a, 150b, and 150c are located circumferentially adjacent one another over surfaces 106 and 108 of rotor core 49. Wear liner segments 150a, 150b, and 150c may jointly form a generally annular or ring-shaped structure (i.e., wear liner 50). Stated differently, wear liner 50 may be constructed from multiple arcuate segments that jointly extend substantially 360 degrees around an axis 121. As used herein, "substantially 360 degrees" means within 5 degrees of 360 degrees. In this regard, in various embodiments, wear liner segments 150a, 150b, and 150c may be coupled to rotor core 49 with a small gap or space between adjacent segments to allow for thermal expansion of wear liner segments 150a, 150b, and 150c and/or rotor core 49. For example, in various embodiments, at temperatures equal to or below 75.0° F (23.9° C), wear liners segments 150a, 150b, and 150c may be spaced between 0.001 inches (0.00254 centimeter) and 0.02 inches (0.0508 centimeter) apart (i.e., between 0.0025 cm (0.0009843 inch) and 0.051 cm (0.02008 inch) apart). In various embodiments, wear liner segments 150a, 150b, and 150c may be in contact with one another at room temperatures. For example, in various embodiments, wear liner segments 150a, 150b, and 150c may be in contact with one another at temperatures equal to or below 75.0° F (23.9° C).

While wear liners 50 are shown including three wear liner segments (i.e., 150a, 150b, and 150c), it should be understood that wear liners 50 as disclosed herein may be a single segment or may comprise any number of wear liner segments. In various embodiments, wear liners 50 may each comprise between one wear liner segments and eight wear liner segments. In various embodiments, wear liners 50 may each comprise between three wear liner segments and six wear liner segments. The wear liner segments may be approximately equal in inner and outer circumferential length. As used herein, "approximately equal" means ± 3.0% of the wear liner segment total outer circumferential length of the wear liner.

Wear liners 50, including wear liner segments 150a, 150b, and 150c, comprise an inner circumferential surface 152 and an outer circumferential surface 154. Wear liners 50, including wear liner segments 150a, 150b, and 150c, further comprise a wear surface 156 and a non-wear surface 158 opposite wear surface 156. Wear surface 156 extends from inner circumferential surface 152 to outer circumferential surface 154 and is oriented away from rotor core 49. Non-wear surface 158 extends from inner circumferential surface 152 to outer circumferential surface 154 and is oriented toward rotor core 49. In various embodiments, wear liner segments 150a, 150b, and 150c each include at least one torque button (protrusion) 160. Protrusions 160 may extend (i.e., protrude) from non-wear surface 158 in an axial direction toward rotor core 49. Protrusions 160 may comprise a generally cylindrical or frustoconical shape.

Protrusions 160 may be located a distance D1 from outer circumferential surface 154 and a distance D2 from inner circumferential surface 152. In various embodiments, distance D1 may be about equal to distance D2. As used herein "about equal" means ±0.05 inches (±0.127 cm). In various embodiments, distance D1 may be greater than distance D2. In various embodiments, distance D2 may be greater than distance D1. The location and configuration of protrusions 160 may be selected to minimize vibration.

Rotor core 49 may comprise a rotor spine 110 and rotor lugs 46. Rotor core 49 may engage rotor splines 18 (FIG. 1) in rotor gaps 112 formed between rotor lugs 46. In this regard, rotor 42 may be rotatable by virtue of the engagement between rotor lugs 46 and rotor splines 18 of wheel 10 (FIG. 1). Each rotor lug 46 may include one or more rivet holes 47 that extend through rotor lug 46 parallel to axis 121. Each rivet hole 47 is configured to receive a fastener to secure rotor core 49 to rotor spline 18. In various embodiments, the fastener may be a rivet, bolt, pin, screw, or other suitable securement mechanism. Rotor core 49 further comprises a first surface 106 and a second surface 108 opposite first surface 106. First surface 106 and second surface 108 may extend along rotor spine 110 between an inner circumferential surface 102 and outer circumferential surface 104 of rotor core 49. A plurality of first depressions 120 may be formed in, and defined by, first surface 106. A plurality of second depressions 122 may be formed in, and defined by, second surface 108. First depressions 120 may be axially aligned with second depressions 122. First depressions 120 and second depressions 122 may each be formed partially through rotor core 49 such that a portion of rotor core 49 remains between a bottom, or axially inward, surface of first depressions 120 and a bottom, or axially inward, surface of second depressions 122.

First depressions 120 and second depressions 122 may comprise a generally cylindrical or frustoconical shape. The shape of first depressions 120 and second depressions 122 may complement the shape of protrusions 160.

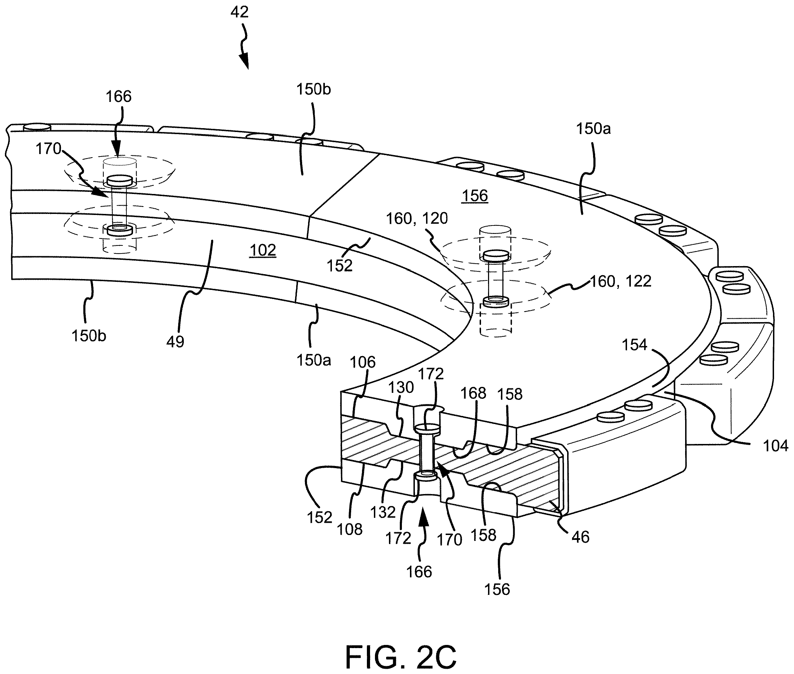

An opening 166 may be formed through protrusions 160. Openings 166 may extend completely through wear liners 50 such that openings 166 extend from wear surface 156 to a surface 168 of protrusion 160 opposite wear surface 156. An opening 116 may be formed through first depressions 120 and second depressions 122. Openings 116 may extend completely through rotor core 49. With momentary reference to FIG. 2C, openings 116 may extend from the bottom, or axially inward, surface 130 of first depressions 120 to the bottom, or axially inward, surface 132 of second depressions 122. Openings 116 may be aligned with openings 166 and may be configured to receive a fastener for securing wear liners 50 to rotor core 49.

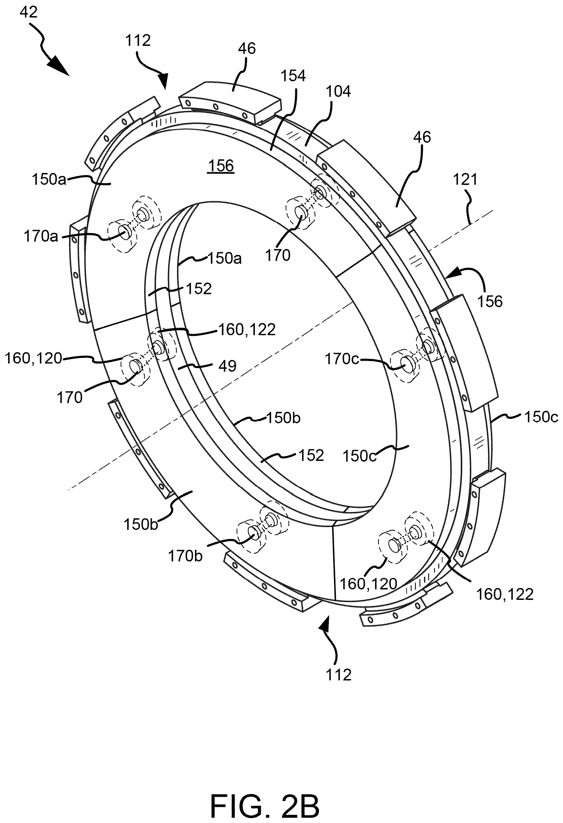

Referring to FIG. 2B, an assembled rotor 42 is illustrated. With combined reference to FIG. 2A and FIG. 2B, protrusions 160 may be located and/or positioned within first depressions 120 and second depressions 122. In this regard, the protrusions 160 adjacent to first surface 106 of rotor core 49 may be positioned within first depressions 120, and the protrusions 160 adjacent to second surface 108 of rotor core 49 may be positioned with second depressions 122. Fasteners 170 may couple or otherwise secure wear liners 50 to rotor core 49. Fasteners 170 may comprise a rivet, bolt, pin, screw, or other suitable securement mechanism. Fasteners 170 may be located through protrusions 160. Fasteners 170 extend between opposing wear liner segments. For example, fastener 170a extends between opposing wear liner segments 150a. Fastener 170b extends between opposing wear liner segments 150b. Fastener 170c extends between opposing wear liner segments 150c. In this regard, fasteners 170 may couple wear liner segments 150a, 150b, and 150c to rotor core 49.

Referring to FIG. 2C, a cutaway view of assembled rotor 42 is illustrated, according to various embodiments. Openings 166 may include a counterbore configured to receive fastener 170. Heads 172 of fasteners 170 may be recessed with respect to wear surface 156. Locating fasteners 170 through protrusion 160 may allow the heads 172 of fasteners 170 to be located a greater distance from wear surface 156. In various embodiments, after wear liners 50 have been fully worn (i.e., after wear liners 50 have been worn below a suitable operational thickness), heads 172 of fasteners 170 may remain recessed with respect to wear surface 156.

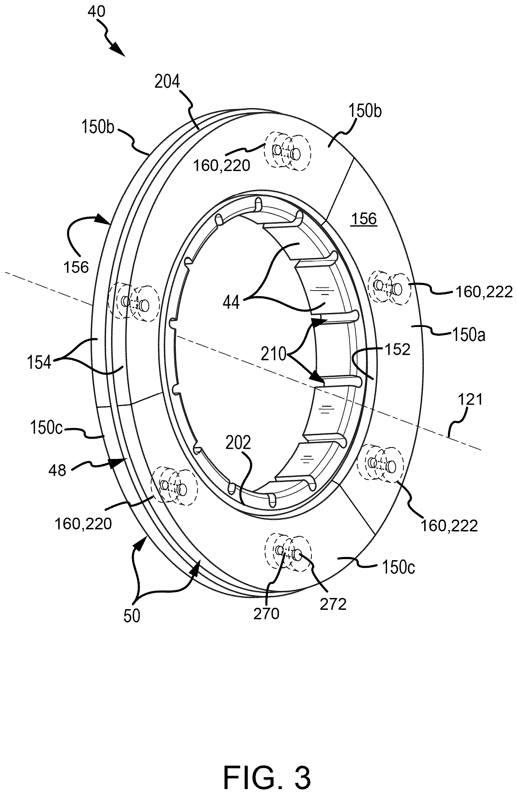

Referring to FIG. 3, an assembled stator 40 comprising wear liner segments having integrated torque buttons is illustrated, according to various embodiments. Stator 40 may comprise a stator core 48 and wear liners 50. While FIG. 3 illustrates a wear liner with torque buttons, the various embodiments are not limited to this embodiment. In that regard, in various embodiments, integrated torque slots may be utilized to attach the wear liners to a rotor 42 or stator 40 CMC core. Stator core 48 may comprise stator lugs 44. Stator lugs 44 may be located along an inner circumferential surface 202. Stator gaps 210 may be located between stator lugs 44. Stator gaps 210 may be positioned to align with stator splines 36 (FIG. 1). The engagement between the stator splines 36 and stator lugs 44 may prevent stator core 48 from rotating in response to a torque being applied to stator 40 during braking. Stator core 48 may include opposing first and second surfaces extending between inner circumferential surface 202 and an outer circumferential surface 204.

A plurality of first depressions 220 may be formed in the first surface of stator core 48. A plurality of second depressions 222 may be formed in the second surface of stator core 48. First depressions 220 may axially aligned with second depressions 222. First depressions 220 and second depressions 222 may each be formed partially through stator core 48 such that a portion of stator core 48 remains between a bottom, or axially inward, surface of first depressions 220 and a bottom, or axially inward, surface of second depressions 222. Protrusions 160 may be located and/or positioned in first depressions 220 and second depressions 222.

Wear liners 50, including wear liner segments 150a, 150b, and 150c, may be coupled to stator core 48 with wear surface 156 oriented away from stator core 48 and protrusions 160 oriented toward stator core 48. Fasteners 270, similar to fasteners 170 in FIG. 2B, may be located through protrusion 160 and may couple wear liner segments 150a, 150b, and 150c to stator core 48.

In various embodiments, wear liner segments 150a, 150b, and 150c, may have an identical or substantially similar configuration. In this regard, the configuration of depressions 120, 122 in rotor core 49 may be identical or substantially similar to the configuration of depressions 220, 222 in stator core 48 such that wear liner segments 150a, 150b, and 150c may be compatible with both (i.e., interchangeable between) rotor core 49 and stator core 48.

During braking, the wear surface 156 of rotor 42 wear liners 50 may contact the wear surface 156 of stator 40 wear liners 50, which may create the friction necessary to decelerate the aircraft. In various embodiments, wear liners 50 may be replaceable, such that after wear liners 50 have been worn below a suitable operational thickness, wear liners 50 may be removed from rotor core 49 and/or stator core 48 and replaced with new or remanufactured wear liners 50. Wear liners 50 formed from a plurality of discrete segments tend to be less susceptible to warpage as compared to unibody wear liners of similar thickness. In this regard, wear liners 50 being segmented may allow a greater volume of wear liners 50 to be consumed (i.e. used, worn) prior to replacement.

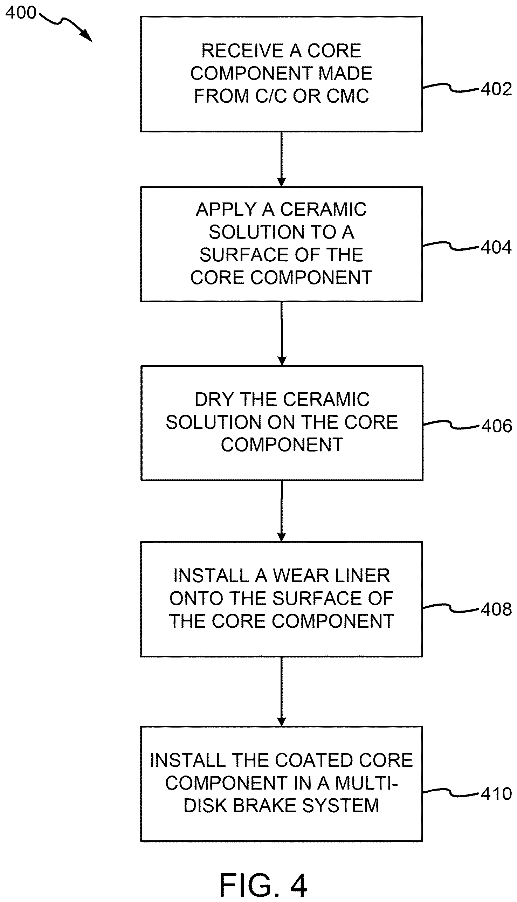

Referring now to FIG. 4, a flowchart illustrating a method 400 for decreasing interfacial wear on core components within a brake stack or heat sink using ceramic solution coatings and thus, increasing core component life is illustrated, in accordance with various embodiments. At block 402, a core component is received. In various embodiments, the core component may be a ceramic matrix composite (CMC) core or carbon/carbon (C/C) core.

At block 404, a ceramic solution is applied onto a formed interface between the core component (e.g., CMC core 48) and a wear liner (e.g., wear liner 50). In various embodiments, the formed interface includes a first surface of the core component (e.g., first surface 106) and/or a second surface of the core component (e.g., second surface 108). That is, the formed interface between the core component and the wear liner includes the surfaces of the core component and the wear liner (e.g., non-wear surface 158) that come into contact with one another. In various embodiments, the ceramic material prevents wear of the core component and/or the wear liner and, in various embodiments, assists in the removal of the wear liner that is affixed to the core component during overhaul by acting as a "mold release" which prevents the core component and liner from becoming adhered to one another during operational use. In various embodiments, the ceramic solution may be applied to the surface of the core component via at least one of spraying, painting, smearing, brushing, sorption, cold spraying, sputtering, pouring, sprinkling, or peptization, among others. In various embodiments, a thickness of the core component may be about 0.20 inches (0.508 centimeter) to about 2 inches (5.08 centimeters) thick. In various embodiments, the core component may be about 0.23 inches (0.5842 centimeter) to about 1.25 inches (3.175 centimeters) thick. In various embodiments, the core component may be about 0.25 inches (0.635 centimeter) to about 0.750 inches (1.905 centimeters) thick.

At block 406, the ceramic solution is dried to produce oxide particulates on the core component. At block 408, a first wear liner is installed onto the first surface of the core component and a second wear liner is installed onto the second surface of the core component. At block 410, the ceramic coated core component may then be installed in a multi-disk brake system, such as the multi-disk brake system 20 of FIG. 1.

In various embodiments, the nano ceramic binary oxide particulates may include zirconium oxide (ZrO₂), aluminum oxide (Al₂O₃), or magnesium oxide (MgO), and various combinations of the same, among others. In various embodiments, the nano ceramic binary oxide particulates may include lithium oxide (Li₂O), beryllium oxide (BeO), calcium oxide (CaO), strontium oxide (SrO), or barium oxide (BaO), and various combinations of the same, among others. In various embodiments, the nano ceramic binary oxide particulates may include scandium(III) oxide (Sc₂O₃), yttrium oxide (Y₂O₃), cobalt(II) oxide (CoO), or nickel oxide (NiO), and various combinations of the same, among others. In various embodiments, the nano ceramic binary oxide particulates may include silicon oxide (SiO₂), titanium oxide (TiO₂), or hafnium(IV) oxide (HfO₂), and various combinations of the same, among others. In various embodiments, the nano ceramic binary oxide particulates may include vanadium(II) oxide (VO), vanadium(III) oxide (V₂O₃), vanadium oxide (VO₂), niobium(II) oxide (NbO), tantalum oxide (Ta₂O₅), tungsten(IV) oxide (WO₂), or tungsten trioxide (WO₃), and various combinations of the same, among others. In various embodiments, the nano ceramic binary oxide particulates may include gallium oxide (GaO), indium oxide (In₂O₃), or tin(IV) oxide (SnO₂), and various combinations of the same, among others. In various embodiments, the nano ceramic binary oxide particulates may include lanthanum oxide (La₂O₃), cerium oxide (CeO₂), praseodymium(III,IV) oxide (Pr₆O₁₁), or neodymium oxide (Nd₂O₃), and various combinations of the same, among others. In various embodiments, the nano ceramic binary oxide particulates may include samarium oxide (Sm₂O₃), europium oxide (Eu₂O₃), gadolinium oxide (Gd₂O₃), terbium oxide (Tb₂O₃), or dysprosium oxide (Dy₂O₃), and various combinations of the same, among others. In various embodiments, the nano ceramic binary oxide particulates may include holmium oxide (Ho₂O₃), erbium oxide (Er₂O₃), thulium oxide (Tm₂O₃), ytterbium oxide (Yb₂O₃), or lutetium oxide (Lu₂O₃), and various combinations of the same, among others. In various embodiments, the doped nano ceramic binary oxide particulates may include yttrium oxide-stabilized zirconium(IV) oxide (YSZ) or zirconium(IV) oxide toughened aluminum oxide (ZTA), and various combinations of the same, among others. In various embodiments, the nano ceramic ternary oxide particulates may include lithium silicate (Li₂SiO₃), mullite (Si₂Al₆O₁₃), calcium silicate (Ca₂SiO₄), or hafnium orthosilicate (HfSiO₄), and various combinations of the same, among others. In various embodiments, the nano ceramic ternary oxide particulates may include lithium titanate (Li₂TiO₃), aluminum titanate (Al₂TiO₅), calcium titanate (CaTiO₃), strontium titanate (SrTiO₃), barium titanate (BaTiO₃), or hafnium titanate (HfTiOa), and various combinations of the same, among others. In various embodiments, the nano ceramic ternary oxide particulates may include strontium zirconate (SrZrO₃) or barium zirconate (BaZrO₃), and various combinations of the same, among others.

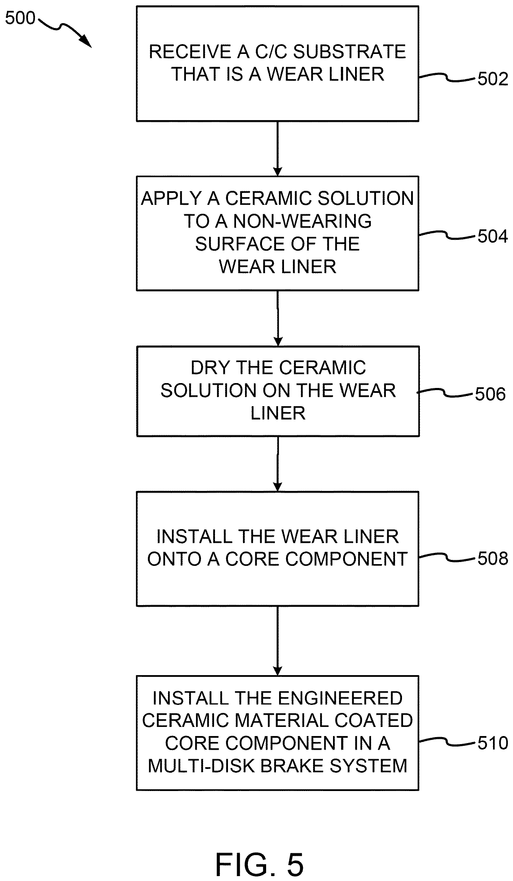

Referring now to FIG. 5, a flowchart illustrating a method 500 for decreasing interfacial wear on non-wearing faces of liner components within a brake stack or heat sink that adhere to core components using ceramic solution coatings and thus, increasing liner component life is illustrated, in accordance with various embodiments. At block 502, a liner component is received. In various embodiments, the liner component is a C/C substrate.

At block 504, a ceramic solution is applied onto a surface (e.g., non-wear surface 158) of the C/C substrate. In various embodiments, the surface of the C/C substrate may include an interface between a core component and a wear liner. In various embodiments, the C/C substrate may be a wear liner (e.g., wear liner 50). In various embodiments, the ceramic material prevents wearing of the core component caused by the wear liner during operation and, in various embodiments, assists in the removal of the wear liner that is affixed to the core during overhaul by acting as a "mold release" which prevents the core and liner from becoming adhered to one another during operational use. In various embodiments, the ceramic solution may be applied to the surface of the core component via at least one of spraying, painting, smearing, brushing, sorption, cold spraying, sputtering, pouring, sprinkling, or peptization, among others. In various embodiments, a thickness of the CMC core may be about 0.20 inches (0.508 centimeter) to about 2 inches (5.08 centimeters) thick. In various embodiments, the CMC core may be about 0.23 inches (0.5842 centimeter) to about 1.25 inches (3.175 centimeters) thick. In various embodiments, the CMC core may be about 0.25 inches (0.635 centimeter) to about 0.750 inches (1.905 centimeters) thick.

At block 506, the ceramic solution is dried to produce oxide particulates on the C/C substrate. At block 508, the C/C substrate (e.g., wear liner) is installed onto a carbon matrix composite (CMC) core to form a brake disk. In various embodiments, one or more fasteners may be used to install the wear liner onto the CMC core. At block 510, the engineered ceramic material coated brake disk may then be installed in a multi-disk brake system, such as the multi-disk brake system 20 of FIG. 1.

In various embodiments, the nano ceramic binary oxide particulates may include zirconium oxide (ZrO₂), aluminum oxide (Al₂O₃), or magnesium oxide (MgO), and various combinations of the same, among others. In various embodiments, the nano ceramic binary oxide particulates may include lithium oxide (Li₂O), beryllium oxide (BeO), calcium oxide (CaO), strontium oxide (SrO), or barium oxide (BaO), and various combinations of the same, among others. In various embodiments, the nano ceramic binary oxide particulates may include scandium(III) oxide (Sc₂O₃), yttrium oxide (Y₂O₃), cobalt(II) oxide (CoO), or nickel oxide (NiO), and various combinations of the same, among others. In various embodiments, the nano ceramic binary oxide particulates may include silicon oxide (SiO₂), titanium oxide (TiO₂), or hafnium(IV) oxide (HfO₂), and various combinations of the same, among others. In various embodiments, the nano ceramic binary oxide particulates may include vanadium(II) oxide (VO), vanadium(III) oxide (V₂O₃), vanadium oxide (VO₂), niobium(II) oxide (NbO), tantalum oxide (Ta₂O₅), tungsten(IV) oxide (WO₂), or tungsten trioxide (WO₃), and various combinations of the same, among others. In various embodiments, the nano ceramic binary oxide particulates may include gallium oxide (GaO), indium oxide (In₂O₃), or tin(IV) oxide (SnO₂), and various combinations of the same, among others. In various embodiments, the nano ceramic binary oxide particulates may include lanthanum oxide (La₂O₃), cerium oxide (CeO₂), praseodymium(III,IV) oxide (Pr₆O₁₁), or neodymium oxide (Nd₂O₃), and various combinations of the same, among others. In various embodiments, the nano ceramic binary oxide particulates may include samarium oxide (Sm₂O₃), europium oxide (Eu₂O₃), gadolinium oxide (Gd₂O₃), terbium oxide (Tb₂O₃), or dysprosium oxide (Dy₂O₃), and various combinations of the same, among others. In various embodiments, the nano ceramic binary oxide particulates may include holmium oxide (Ho₂O₃), erbium oxide (Er₂O₃), thulium oxide (Tm₂O₃), ytterbium oxide (Yb₂O₃), or lutetium oxide (Lu₂O₃), and various combinations of the same, among others. In various embodiments, the doped nano ceramic binary oxide particulates may include yttrium oxide-stabilized zirconium(IV) oxide (YSZ) or zirconium(IV) oxide toughened aluminum oxide (ZTA), and various combinations of the same, among others. In various embodiments, the nano ceramic ternary oxide particulates may include lithium silicate (Li₂SiO₃), mullite (Si₂Al₆O₁₃), calcium silicate (Ca₂SiO₄), or hafnium orthosilicate (HfSiO₄), and various combinations of the same, among others. In various embodiments, the nano ceramic ternary oxide particulates may include lithium titanate (Li₂TiO₃), aluminum titanate (Al₂TiO₅), calcium titanate (CaTiO₃), strontium titanate (SrTiO₃), barium titanate (BaTiO₃), or hafnium titanate (HfTiOa), and various combinations of the same, among others. In various embodiments, the nano ceramic ternary oxide particulates may include strontium zirconate (SrZrO₃) or barium zirconate (BaZrO₃), and various combinations of the same, among others.

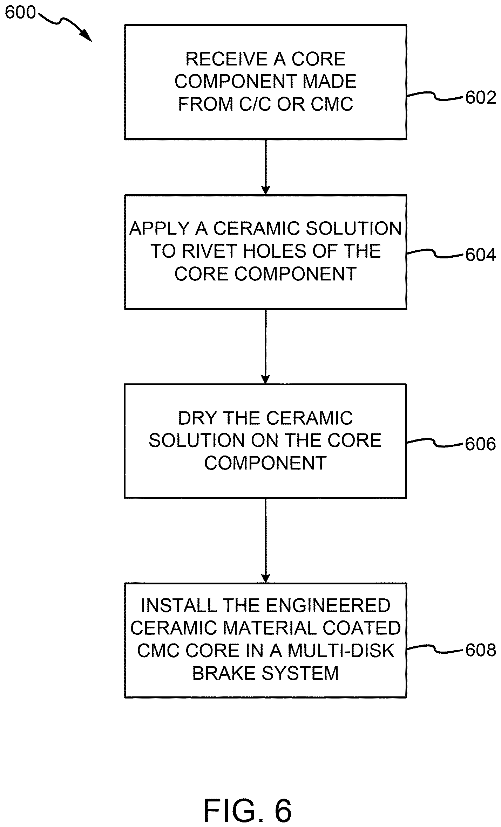

Referring now to FIG. 6, a flowchart illustrating a method 600 for decreasing interfacial wear in rivet holes of core components within a brake stack or heat sink and thus, increasing the life of the core component is illustrated, in accordance with various embodiments. At block 602, a core component that is a CMC core is received.

At block 604, a ceramic solution is applied onto an inner surface of a plurality of rivet holes (e.g., rivet holes 47) formed in a CMC core (e.g., CMC core 48). In various embodiments, the ceramic material may prevent the rivets from wearing the plurality of rivet holes in the CMC core and, in various embodiments, assists in the removal of rivets used to secure the liners to the CMC core during overhaul. In various embodiments, the ceramic solution may be applied to the surface of the core component via at least one of spraying, painting, smearing, brushing, sorption, cold spraying, sputtering, pouring, sprinkling, or peptization, among others. In various embodiments, a thickness of the CMC core may be about 0.20 inches (0.508 centimeter) to about 2 inches (5.08 centimeters) thick. In various embodiments, the CMC core may be about 0.23 inches (0.5842 centimeter) to about 1.25 inches (3.175 centimeters) thick. In various embodiments, the CMC core may be about 0.25 inches (0.635 centimeter) to about 0.750 inches (1.905 centimeters) thick.

At block 606, the ceramic solution is dried to produce oxide particulates within the plurality of rivet holes on the CMC core. At block 608, CMC core including the ceramic coated plurality of rivet holes may then be installed in a multi-disk brake system, such as the multi-disk brake system 20 of FIG. 1.

In various embodiments, the nano ceramic binary oxide particulates may include zirconium oxide (ZrO₂), aluminum oxide (Al₂O₃), or magnesium oxide (MgO), and various combinations of the same, among others. In various embodiments, the nano ceramic binary oxide particulates may include lithium oxide (Li₂O), beryllium oxide (BeO), calcium oxide (CaO), strontium oxide (SrO), or barium oxide (BaO), and various combinations of the same, among others. In various embodiments, the nano ceramic binary oxide particulates may include scandium(III) oxide (Sc₂O₃), yttrium oxide (Y₂O₃), cobalt(II) oxide (CoO), or nickel oxide (NiO), and various combinations of the same, among others. In various embodiments, the nano ceramic binary oxide particulates may include silicon oxide (SiO₂), titanium oxide (TiO₂), or hafnium(IV) oxide (HfO₂), and various combinations of the same, among others. In various embodiments, the nano ceramic binary oxide particulates may include vanadium(II) oxide (VO), vanadium(III) oxide (V₂O₃), vanadium oxide (VO₂), niobium(II) oxide (NbO), tantalum oxide (Ta₂O₅), tungsten(IV) oxide (WO₂), or tungsten trioxide (WO₃), and various combinations of the same, among others. In various embodiments, the nano ceramic binary oxide particulates may include gallium oxide (GaO), indium oxide (In₂O₃), or tin(IV) oxide (SnO₂), and various combinations of the same, among others. In various embodiments, the nano ceramic binary oxide particulates may include lanthanum oxide (La₂O₃), cerium oxide (CeO₂), praseodymium(III,IV) oxide (Pr₆O₁₁), or neodymium oxide (Nd₂O₃), and various combinations of the same, among others. In various embodiments, the nano ceramic binary oxide particulates may include samarium oxide (Sm₂O₃), europium oxide (Eu₂O₃), gadolinium oxide (Gd₂O₃), terbium oxide (Tb₂O₃), or dysprosium oxide (Dy₂O₃), and various combinations of the same, among others. In various embodiments, the nano ceramic binary oxide particulates may include holmium oxide (Ho₂O₃), erbium oxide (Er₂O₃), thulium oxide (Tm₂O₃), ytterbium oxide (Yb₂O₃), or lutetium oxide (Lu₂O₃), and various combinations of the same, among others. In various embodiments, the doped nano ceramic binary oxide particulates may include yttrium oxide-stabilized zirconium(IV) oxide (YSZ) or zirconium(IV) oxide toughened aluminum oxide (ZTA), and various combinations of the same, among others. In various embodiments, the nano ceramic ternary oxide particulates may include lithium silicate (Li₂SiO₃), mullite (Si₂Al₆O₁₃), calcium silicate (Ca₂SiO₄), or hafnium orthosilicate (HfSiO₄), and various combinations of the same, among others. In various embodiments, the nano ceramic ternary oxide particulates may include lithium titanate (Li₂TiO₃), aluminum titanate (Al₂TiO₅), calcium titanate (CaTiO₃), strontium titanate (SrTiO₃), barium titanate (BaTiO₃), or hafnium titanate (HfTiO₄), and various combinations of the same, among others. In various embodiments, the nano ceramic ternary oxide particulates may include strontium zirconate (SrZrO₃) or barium zirconate (BaZrO₃), and various combinations of the same, among others.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A method for decreasing a wear rate at a core-liner interface between a core component (108) and a wear liner component of a core-liner brake stack configuration and increasing the life of the core component (108), the method comprising:
coating a surface of a substrate with a ceramic solution, wherein the substrate is a first surface of the core component (108) or a second non-wearing surface of the wear liner component, wherein the first surface of the core component (108) and the second non-wearing surface of the wear liner component meet to form an interface between the core component (108) and the wear liner component;
drying the coated surface to produce oxide particulates within the substrate; and
forming a coated brake disk by coupling the wear liner component onto the core component (108), wherein the coated brake disk includes the coated surface.

2. The method of claim 1, wherein the wear liner component is made of a carbon/carbon (C/C) composite material and the core component (108) is made of C/C composite or ceramic matrix composite (CMC) material and wherein the ceramic solution is applied to the surface of the substrate via at least one of spraying, painting, smearing, brushing, sorption, cold spraying, sputtering, pouring, sprinkling, or peptization.

3. The method of claim 1, wherein the ceramic solution comprises at least one of nano ceramic binary oxide particulates, doped nano ceramic binary oxide particulates, or nano ceramic ternary oxide particulates and acts as a release agent between the core component (108) and the wear liner component.

4. The method of claim 1, wherein the nano ceramic binary oxide particulates comprise at least one of zirconium oxide (ZrO₂), aluminum oxide (Al₂O₃), magnesium oxide (MgO), lithium oxide (Li₂O), beryllium oxide (BeO), calcium oxide (CaO), strontium oxide (SrO), or barium oxide (BaO),
or wherein the nano ceramic binary oxide particulates comprise at least one of scandium (III) oxide (Sc₂O₃), yttrium oxide (Y₂O₃), cobalt (II) oxide (CoO), nickel oxide (NiO), silicon oxide (SiO₂), titanium oxide (TiO₂), or hafnium(IV) oxide (HfO₂),
or wherein the nano ceramic binary oxide particulates comprise at least one of vanadium (II) oxide (VO), vanadium (III) oxide (V₂O₃), vanadium oxide (VO₂), niobium (II) oxide (NbO), tantalum oxide (Ta₂O₅), tungsten (IV) oxide (WO₂), tungsten trioxide (WO₃), gallium oxide (GaO), indium oxide (In₂O₃), or tin (IV) oxide (SnO₂).

5. The method of claim 1, wherein the nano ceramic binary oxide particulates comprise at least one of lanthanum oxide (La₂O₃), cerium dioxide (CeO₂), praseodymium(III,IV) oxide (Pr₆O₁₁), neodymium oxide (Nd₂O₃), samarium oxide (Sm₂O₃), europium oxide (Eu₂O₃), gadolinium oxide (Gd₂O₃), terbium oxide (Tb₂O₃), or dysprosium oxide (Dy₂O₃),
or wherein the nano ceramic binary oxide particulates comprise at least one of holmium oxide (Ho₂O₃), erbium oxide (Er₂O₃), thulium oxide (Tm₂O₃), ytterbium oxide (Yb₂O₃), or lutetium oxide (Lu₂O₃).

6. The method of claim 1, wherein the doped nano ceramic binary oxide particulates comprise at least one of yttrium oxide stabilized zirconium(IV) oxide (YSZ) or zirconium(IV) oxide toughened aluminum oxide (ZTA).

7. The method of claim 1, wherein the nano ceramic ternary oxide particulates comprise at least one of lithium silicate (Li₂SiO₃), mullite (Si₂Al₆O₁₃), calcium silicate (Ca₂SiO₄), hafnium orthosilicate (HfSiO₄), lithium titanate (Li₂TiO₃), aluminum titanate (Al₂TiO₅), calcium titanate (CaTiO₃), strontium titanate (SrTiO₃), barium titanate (BaTiO₃), hafnium titanate (HfTiO₄) strontium zirconate (SrZrO₃), or barium zirconate (BaZrO₃).

8. A method for decreasing the wear rate of a core-rivet interface between a core and a rivet used to mechanically attach a liner component to the core within a core-liner brake stack configuration, the method comprising:
coating a plurality of rivet holes formed in the core with a ceramic solution, including coating an inner lining of each rivet hole of the plurality of rivet holes;
drying the core to produce oxide particulates within the inner lining of each rivet hole to form a coated core; and
attaching the liner component to the core using a plurality of fasteners, each of the plurality of fasteners extending through a rivet hole of the plurality of rivet holes.

9. The method of claim 8, wherein the core is made of C/C composite or ceramic matrix composite (CMC) material and wherein the ceramic solution is applied to the inner lining of each rivet hole via at least one of spraying, painting, smearing, brushing, sorption, cold spraying, sputtering, pouring, sprinkling, or peptization.

10. The method of claim 8, wherein the ceramic solution comprises at least one of nano ceramic binary oxide particulates, doped nano ceramic binary oxide particulates, or nano ceramic ternary oxide particulates and acts as a release agent between the core and the plurality of rivet holes.

11. The method of claim 8, wherein the nano ceramic binary oxide particulates comprise at least one of zirconium oxide (ZrO₂), aluminum oxide (Al₂O₃), magnesium oxide (MgO), lithium oxide (Li₂O), beryllium oxide (BeO), calcium oxide (CaO), strontium oxide (SrO), or barium oxide (BaO),
or wherein the nano ceramic binary oxide particulates comprise at least one of scandium (III) oxide (Sc₂O₃), yttrium oxide (Y₂O₃), cobalt (II) oxide (CoO), nickel oxide (NiO), silicon oxide (SiO₂), titanium oxide (TiO₂), or hafnium(IV) oxide (HfO₂).

12. The method of claim 8, wherein the nano ceramic binary oxide particulates comprise at least one of vanadium (II) oxide (VO), vanadium (III) oxide (V₂O₃), vanadium oxide (VO₂), niobium (II) oxide (NbO), tantalum oxide (Ta₂O₅), tungsten (IV) oxide (WO₂), tungsten trioxide (WO₃), gallium oxide (GaO), indium oxide (In₂O₃), or tin (IV) oxide (SnO₂).

13. The method of claim 8, wherein the nano ceramic binary oxide particulates comprise at least one of lanthanum oxide (La₂O₃), cerium dioxide (CeO₂), praseodymium(III,IV) oxide (Pr₆O₁₁), neodymium oxide (Nd₂O₃), samarium oxide (Sm₂O₃), europium oxide (Eu₂O₃), gadolinium oxide (Gd₂O₃), terbium oxide (Tb₂O₃), or dysprosium oxide (Dy₂O₃),
or wherein the nano ceramic binary oxide particulates comprise at least one of holmium oxide (Ho₂O₃), erbium oxide (Er₂O₃), thulium oxide (Tm₂O₃), ytterbium oxide (Yb₂O₃), or lutetium oxide (Lu₂O₃).

14. The method of claim 8, wherein the doped nano ceramic binary oxide particulates comprise at least one of yttrium oxide stabilized zirconium(IV) oxide (YSZ) or zirconium(IV) oxide toughened aluminum oxide (ZTA).

15. The method of claim 8, wherein the nano ceramic ternary oxide particulates comprise at least one of lithium silicate (Li₂SiO₃), mullite (Si₂Al₆O₁₃), calcium silicate (Ca₂SiO₄), hafnium orthosilicate (HfSiO₄), lithium titanate (Li₂TiO₃), aluminum titanate (Al₂TiO₅), calcium titanate (CaTiO₃), strontium titanate (SrTiO₃), barium titanate (BaTiO₃), hafnium titanate (HfTiO₄) strontium zirconate (SrZrO₃), or barium zirconate (BaZrO₃).
